# EUROPEAN PATENT APPLICATION

(11) **EP 4 631 345 A1**
(43) Date of publication of application: **15.10.2025**
(21) Application number: 25164623.8
(22) Date of filing: 19.03.2025
(51) Int. Cl.: A01F 15/07, A01F 15/08, B65B 27/12

(54) **A BALE BINDER MATERIAL WITH BUILT IN STRETCH INDICATOR**

(30) Priority: 08.04.2024 US 202418628940
(71) Applicant: Deere & Company, Moline, IL 61265 (US)
(72) Inventor: ERDMANN, Jeremy M., Mannheim (DE); EUBANKS, Jason C., Mannheim (DE)
(74) Representative: Stein, Stefan

(57) **Abstract**

A bale binder for wrapping a cylindrical bale includes a sheet of wrap material and a stretch indicator disposed on the sheet of wrap material. The stretch indicator exhibits a stretch characteristic that is operable to change states based on an amount of stretch of the sheet of wrap material. The stretch characteristic of the stretch indicator exhibits a first state when the stretch indicator is disposed in an initial un-stretched condition. The stretch characteristic of the stretch indicator exhibits a second state when the stretch indicator is disposed in a desired stretch condition. The desired stretch condition includes a stretch magnitude that is greater than a pre-determined stretch value relative to the initial un-stretched condition.

## Description

### TECHNICAL FIELD

The disclosure generally relates to a bale binder material for wrapping a bale of crop material.

### BACKGROUND

There are a wide variety of different types of baler implements that generate bales of material. Such baler implements can bale material like hay, straw, silage, cotton, recycled paper products, etc. One type of machine produces a bale having a cylindrical shape. Such a machine is often referred to as a round baler. A round baler gathers crop material and feeds the crop material into a baling chamber. The baler implement rolls the crop material in a spiral fashion into the bale having a cylindrical shape. Once formed, the baler implement wraps the bale with a bale binder material to secure the cylindrical shape of the bale and hold the baled crop material together.

The bale binder material may include, for example, a net wrap material or a solid wrap material. The bale binder material must be tightly tensioned about the exterior circumferential surface of the completed bale to secure the shape of the bale and hold the baled crop material together. A tightly held bale sheds water better than a loosely held bale. Additionally, if the bale binder material is not sufficiently tensioned, the bale will be loose, allowing the crop material to sag and/or deform from the desired cylindrical shape. When properly tensioned, the bale binder material maintains the generally cylindrical shape of the bale without excessive sag and/or deformation of the desired cylindrical shape. When properly tensioned, the bale binder material exhibits a desired amount of stretch, particularly in the circumferential direction, relative to an unstretched condition of the bale binder material.

### SUMMARY

A bale binder for wrapping around an exterior of a cylindrical bale to secure the cylindrical shape of the bale is provided. The bale binder includes a sheet of wrap material. A stretch indicator is disposed on the sheet of wrap material. The stretch indicator exhibits a stretch characteristic that is operable to change states based on an amount of stretch of the sheet of wrap material. The stretch characteristic of the stretch indicator exhibits a first state when the stretch indicator is disposed in an initial un-stretched condition. The stretch characteristic of the stretch indicator exhibits a second state when the stretch indicator is disposed in a desired stretch condition. The desired stretch condition includes a stretch magnitude that is greater than a pre-determined stretch value relative to the initial un-stretched condition.

In one aspect of the disclosure, the stretch characteristic includes a visual characteristic that is observable by a human operator or an automated visual inspection and control system. For example, the stretch characteristic of the stretch indicator may include, but is not limited to, one of a color, a shape, or a size of the stretch indicator.

In one aspect of the disclosure, the stretch indicator may include a coating operable to change color based on an amount of stretch exhibited by the stretch indicator. The coating may be applied onto the sheet of wrap material, or may be applied onto a substrate which is in turn attached to the sheet of wrap material.

For example, in one implementation of the disclosure the first state of the stretch characteristic may include a first color, and the second state of the stretch characteristic may include a second color that is different from the first color. The stretch indicator is operable to change color based on an amount of stretch of the stretch indicator relative to the initial un-stretched condition. As such, when the stretch indicator is disposed in the initial un-stretched condition, such as prior to being wrapped tightly around a bale, the stretch characteristic exhibits the first color. Upon being wrapped around the bale at a tension sufficient to generate the desired stretch condition, the stretch characteristic exhibits the second color. The human operator or inspections system may easily determine if the bale binder has achieved the desired stretch condition, and the appropriate tension to achieve the desired stretch condition, by visually checking the color of the stretch indicator on the sheet of wrap material.

In one aspect of the disclosure, the first state of the stretch characteristic may include a first shape, and the second state of the stretch characteristic may include a second shape that is different from the first shape. The stretch indicator is operable to change shape based on an amount of stretch of the stretch indicator relative to the initial un-stretched condition. As such, when the stretch indicator is disposed in the initial un-stretched condition, such as prior to being wrapped tightly around a bale, the stretch characteristic exhibits the first shape. Upon being wrapped around the bale at a tension sufficient to generate the desired stretch condition, the stretch characteristic exhibits the second shape. The human operator or inspection system may easily determine if the bale binder has achieved the desired stretch condition, and the appropriate tension to achieve the desired stretch condition, by visually checking the shape of the stretch indicator on the sheet of wrap material. In one implementation, the first shape may include for example, but is not limited to a non-linear shape, and the second shape may include for example, but is not limited to, a linear shape.

In one aspect of the disclosure, the stretch indicator may include indicia, e.g., markings, that are applied onto the sheet of wrap material. For example, the stretch indicator may include markings applied to the sheet of wrap material indicating a length when in the un-stretched condition, and indicating a length when stretched to the desired stretch condition.

In one aspect of the disclosure, the sheet of wrap material may include one of a net wrap material or a solid wrap material. The wrap material may be an organic compound or a polymer compound.

In one implementation of the disclosure, the stretch characteristic of the stretch indicator may continuously change between the first state and the second state proportionally relative to an amount of stretch of the stretch indicator relative to the initial un-stretched condition. In another implementation of the disclosure, the stretch characteristic of the stretch indicator may remain in the first state as the amount of stretch of the stretch indicator changes until the desired stretch condition is reached, after which the stretch characteristic of the stretch indicator may change to the second state.

Accordingly, the human operator or inspection system may quickly and easily determine if the bale binder is sufficiently tensioned around the bale by checking the state of the stretch characteristic of the stretch indicator. If the stretch characteristic is exhibiting the second state, the human operator may know from a quick visual inspection that the bale binder has achieved the desired stretch condition, which indicates that the bale binder is properly and sufficiently tensioned around the bale. If the stretch characteristic is exhibiting the first state and/or is not exhibiting the second state, the human operator may know from a quick visual inspection that the bale binder has not achieved the desired stretch condition, and that a wrap system of the baler implement may need adjustment to achieve the proper tension of the bale binder around the bale.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic side view of a round baler.
FIG. 2 is a schematic perspective view of a round bale having a cylindrical shape.
FIG. 3 is a schematic perspective view of a sheet of wrap material.
FIG. 4 is a schematic perspective view of a supply roll of the sheet of wrap material.
FIG. 5 is a schematic plan view of the sheet of wrap material showing first implementation of a stretch indicator in an initial un-stretched condition.
FIG. 6 is a schematic plan view of the sheet of wrap material showing the first implementation of the stretch indicator in a desired stretch condition.
FIG. 7 is a schematic plan view of the sheet of wrap material showing a second implementation of the stretch indicator in the initial un-stretched condition.
FIG. 8 is a schematic plan view of the sheet of wrap material showing the second implementation of the stretch indicator in the desired stretch condition.
FIG. 9 is a schematic plan view of the sheet of wrap material showing a third implementation of the stretch indicator in the initial un-stretched condition.
FIG. 10 is a schematic plan view of the sheet of wrap material showing the third implementation of the stretch indicator in the desired stretch condition.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

The terms "forward", "rearward", "left", and "right", when used in connection with a moveable implement and/or components thereof are usually determined with reference to the direction of travel during operation, but should not be construed as limiting. The terms "longitudinal" and "transverse" are usually determined with reference to the fore-and-aft direction of the implement relative to the direction of travel during operation, and should also not be construed as limiting.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof

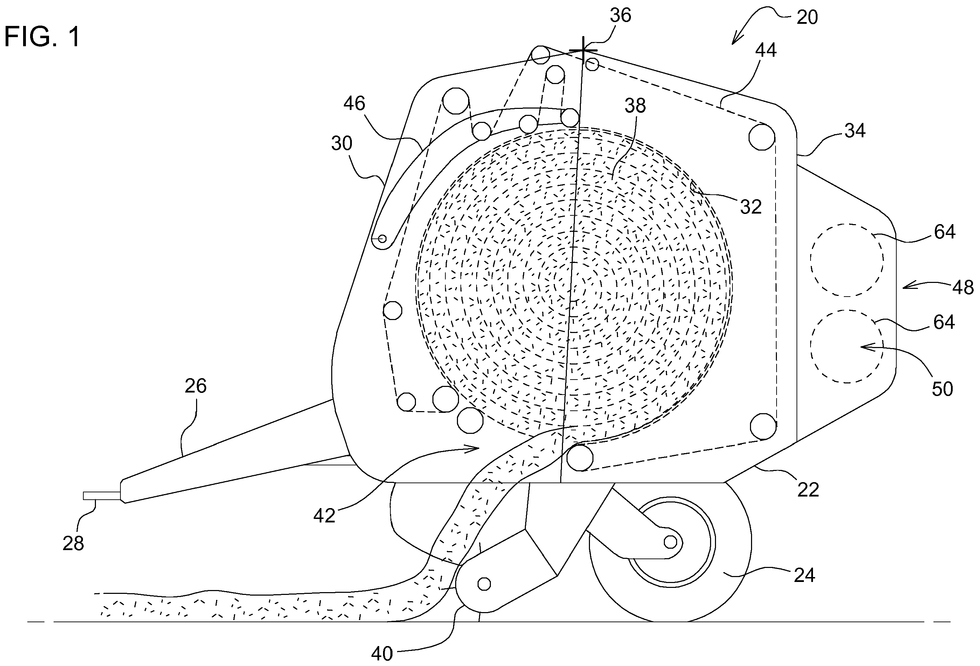

Referring to the Figures, wherein like numerals indicate like parts throughout the several views, an example implementation of a round baler is generally shown at 20. Referring to FIG. 1, the round baler 20 includes a frame 22. One or more ground engaging elements 24, such as but not limited to one or more wheels and/or tracks, are attached to and rotatably supported by the frame 22. A tongue 26 may be coupled to the frame 22 at a forward end of the frame 22. A hitch arrangement 28 may be included with the tongue 26. The hitch arrangement 28 may be used to attach the round baler 20 to a traction unit, such as but not limited to an agricultural tractor. In other embodiments, the round baler 20 may be self-propelled, in which case the traction unit and the round baler 20 are configured as a single, self-propelled vehicle.

The round baler 20 includes a housing 30 forming a baling chamber 32. The housing 30 is attached to and supported by the frame 22. The housing 30 may include one or more walls or panels that at least partially enclose and/or define the baling chamber 32. The round baler 20 further includes a gate 34. The gate 34 is attached to and rotatably supported by the housing 30. The gate 34 is positioned adjacent a rearward end of the frame 22 and is pivotably moveable about a gate axis 36. The gate axis 36 is generally horizontal and perpendicular to a central longitudinal axis of the frame 22. The gate 34 is moveable between a closed position for forming a bale 38 within the baling chamber 32, and an open position for discharging the bale 38 from the baling chamber 32.

The round baler 20 includes a pick-up 40 disposed proximate the forward end of the frame 22. The pickup gathers crop material from a ground surface and directs the gathered crop material toward and into an inlet 42 of the baling chamber 32. The pickup may include, but is not limited to tines, forks, augers, conveyors, baffles, etc., for gathering and moving the crop material.

The round baler 20 may be configured as a variable chamber baler, or as a fixed chamber baler. The round baler 20 shown in the Figures and described herein is depicted and described as a variable chamber baler. As is understood by those skilled in the art, the variable chamber baler includes a plurality of longitudinally extending side-by-side forming belts 44 that are supported by a plurality of rollers. The bale 38 is formed by the forming belts 44 and one or more side walls of the housing 30.

The crop material is directed through the inlet 42 and into the baling chamber 32, whereby the forming belts 44 roll the crop material in a spiral fashion into the bale 38 having a cylindrical shape. The belts apply a constant pressure to the crop material as the crop material is formed into the bale 38. A belt tensioner 46 continuously moves the forming belts 44 radially outward relative to a center of the cylindrical bale 38 as the diameter of the bale 38 increases. The belt tensioner 46 maintains the appropriate tension in the belts to obtain the desired density of the crop material forming the bale 38.

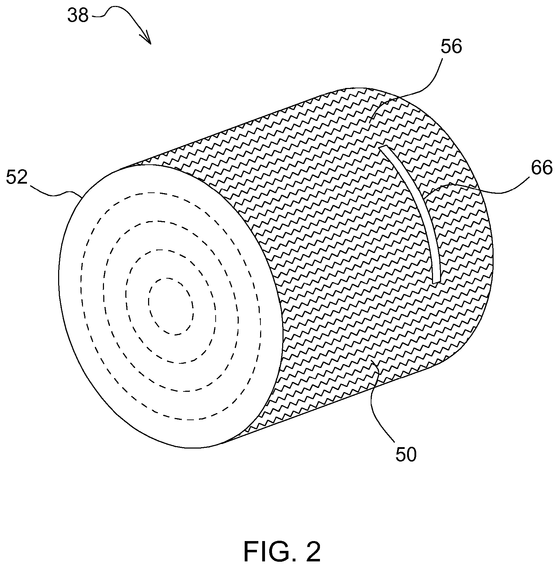

The round baler 20 includes a wrap system 48. The wrap system 48 is operable to wrap the formed bale 38 within the baling chamber 32 with a bale binder 50. Once the bale 38 is formed to a desired size, the wrap system 48 feeds the bale binder 50 into the baling chamber 32, whereby the bale binder 50 is wrapped around an exterior circumferential surface 52 of the cylindrical shape of the bale 38 to secure the crop material in a tight package and maintain the desired generally cylindrical shape of the bale 38, such as shown in FIG. 2. The specific features, components and operation of the wrap system 48 are understood by those skilled in the art, are not pertinent to the teachings of this disclosure, and are therefore not described in greater detail herein. Movement of the gate 34 into the open position simultaneously moves the belts clear of the formed bale 38, and allows the formed and wrapped bale 38 to be discharged through the rear of the baling chamber 32.

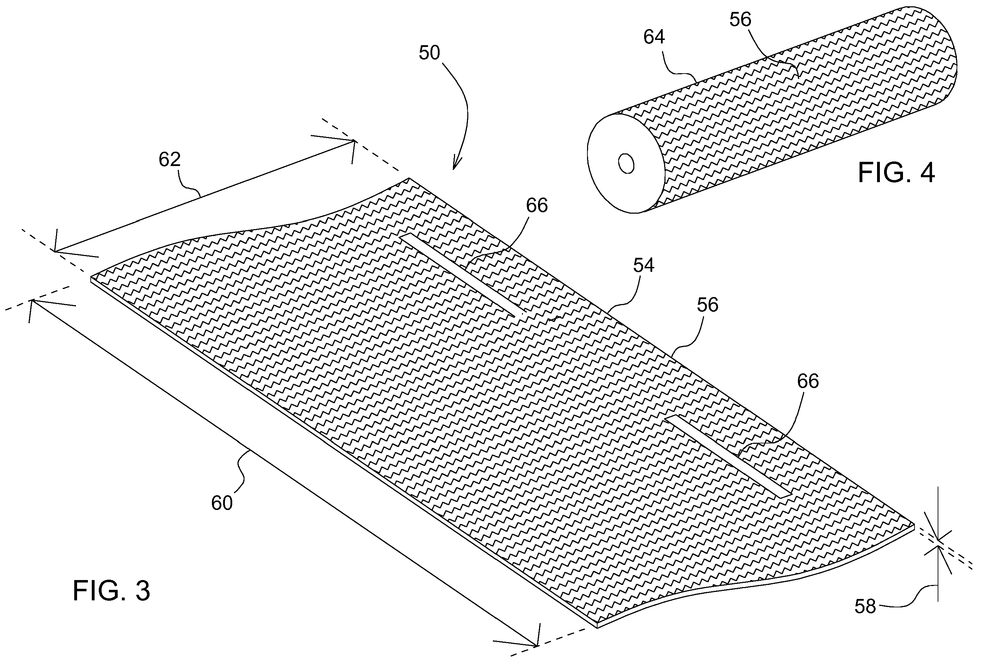

Referring to FIG. 3, the bale binder 50 includes a sheet 54 of wrap material 56. The sheet 54 of wrap material 56 includes a thickness 58, a length 60, and a width 62. The width 62 of the sheet 54 is approximately equal to or slightly larger than a width 62 (or height) of the cylindrical shape of the bale 38. The length 60 of the sheet 54 of wrap material 56 is greater than the width 62, and is generally sufficient to wrap several different bales 38. Referring to FIG. 4, the sheet 54 of wrap material 56 is typically wound about a cylindrical core to form a supply roll 64 of the wrap material 56. As shown in FIG. 1, the supply roll 64 of the wrap material 56 is loaded into the wrap system 48 of the round baler 20. In operation, the wrap system 48 unwinds the bale binder 50, i.e., the sheet 54 of the wrap material 56 from the supply roll 64 to feed the bale binder 50 into the baling chamber 32 to wrap the bale 38.

The sheet 54 of wrap material 56 may include, but is not limited to, one of a net wrap material or a solid wrap material. The net wrap material may include a web formed from strands of, for example, polymer material. The solid wrap material may include a solid sheet of, for example, polymer material. While the sheet 54 of wrap material 56, for example, the net wrap material or the solid wrap material, is generally described herein as being formed from a polymer, it should be appreciated that the sheet 54 of wrap material 56 may be formed from a non-polymer or organic material.

Referring to FIG. 3, the bale binder 50 includes a stretch indicator 66. The stretch indicator 66 is disposed on the sheet 54 of wrap material 56. It should be appreciated that the sheet 54 of wrap material 56 may include several different stretch indicators 66 spaced along the length 60 of the sheet 54 of wrap material 56, such that each bale 38 wrapped from the supply roll 64 of the wrap material 56 includes at least one stretch indicator 66.

The stretch indicator 66 exhibits a stretch characteristic that is operable to change states based on an amount of stretch of the sheet 54 of wrap material 56. The stretch indicator 66 may include, but is not limited to, one of a coating applied directly onto the sheet 54 of wrap material 56, or a substrate that is attached to the sheet 54 of wrap material 56. The substrate may include a coating applied thereto.

In one implementation, the stretch characteristic includes a visual characteristic. As used herein, the visual characteristic should be interpreted to include a characteristic that is visually discernable and/or identifiable by a human operator or an automated visual inspection and control system. For example, the stretch characteristic of the stretch indicator 66, may include one of a color, a shape, or a size of the stretch indicator 66.

As noted above, the stretch indicator 66 exhibits the stretch characteristic that is operable to change states based on an amount of stretch of the sheet 54 of wrap material 56 to which the stretch indicator 66 is attached. Accordingly, it should be appreciated that the stretch indicator 66 is stretched with the sheet 54 of wrap material 56. As such, the stretch of the stretch indicator 66 is equal to the stretch of the sheet 54 of wrap material 56, and may be used to estimate and/or may be correlated to a tension of the sheet 54 of wrap material 56.

The stretch characteristic of the stretch indicator 66 may exhibit a first state when the stretch indicator 66 is disposed in an initial un-stretched condition, i.e., before applied to and wrapped around the cylindrical bale 38. The stretch characteristic of the stretch indicator 66 may exhibit a second state when the stretch indicator 66 is disposed in a desired stretch condition. The desired stretch condition may include an amount of stretch and/or a stretch magnitude that is greater than a pre-determined stretch value relative to the initial un-stretched condition. The desired stretch condition may be correlated to a desired tension of the sheet 54 of wrap material 56 when properly wrapped around the bale 38. As such, it should be appreciated that the stretch of the sheet 54 of wrap material 56 and the stretch indicator 66 attached thereto is proportional to the tension of the sheet 54 of wrap material 56, and that the desired stretch condition may be defined based on the desired tension of the sheet 54 of wrap material 56.

In one implementation, the stretch characteristic of the stretch indicator 66 may continuously change between the first state and the second state proportionally relative to an amount of stretch of the stretch indicator 66 relative to the initial un-stretched condition. In other words, the stretch characteristic may exhibit an incremental range of states between the first state, i.e., the un-stretched condition, and the second state, i.e., stretched to the desired stretch condition. In another implementation, the stretch characteristic of the stretch indicator 66 may remain constant in the first state as the amount of stretch of the stretch indicator 66 changes between the first state and the second state, until the desired stretch condition is reached, after which the stretch characteristic of the stretch indicator 66 changes from the first state to the second state.

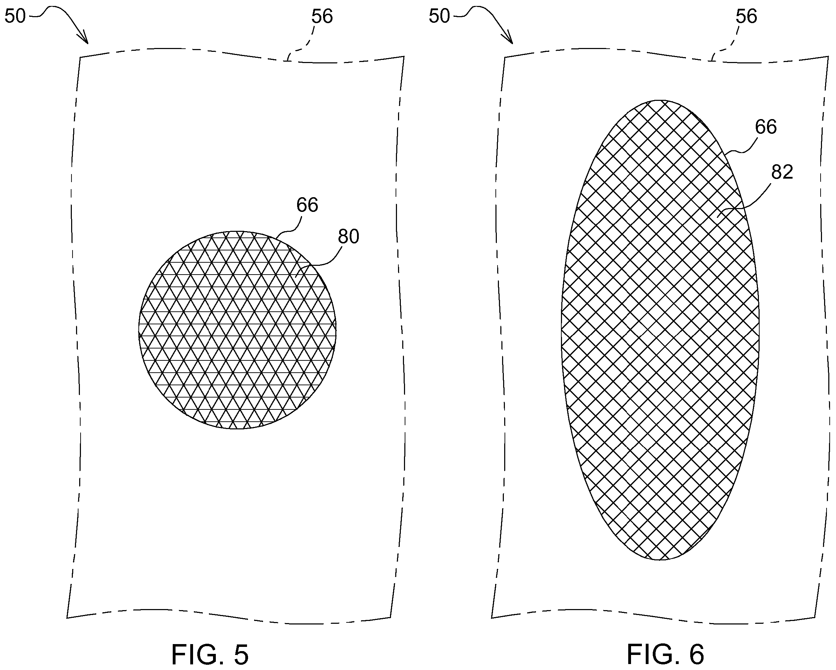

In one implementation, referring to FIGS. 5 and 6, the stretch indicator 66 may include a material or a coating that is operable to change visible color based on an amount of stretch exhibited by the stretch indicator 66. The coating may be applied directly onto the sheet 54 of wrap material 56, or may be applied onto a substrate which is in turn attached to the sheet 54 of material. In other implementations, a color changing material or substrate may be attached to the sheet 54 of material.

In one example implementation, as shown in FIG. 5, the first state of the stretch characteristic includes a first color 80, and as shown in FIG. 6, the second state of the stretch characteristic includes a second color 82 different from the first color 80. The stretch characteristic exhibits the first color 80 when disposed in the initial un-stretched condition, such as prior to application onto and around the bale 38. The stretch indicator 66 is operable to change color based on an amount of stretch of the stretch indicator 66 relative to the initial un-stretched condition. The stretch characteristic changes from the first color 80 to the second color 82 when the desired stretch condition is achieved.

In one example implementation, the stretch indicator 66 may include a structural color. As understood by those skilled in the art, a structural color changes shades and/or colors based on an arrangement of surfaces and how the surfaces reflect light. Changing the orientation and/or position of these surfaces, such as occurs when the material is stretched, changes the shade and/or color reflected by the structural color material. For example, in one implementation, the structural color material/coating may include, but is not limited to, a silicon film. The silicon film may be hundreds of times thinner than a human hair, is etched with a pattern of ridges that reflect light in a certain way. When the silicon film is stretched, the ridges spread out or compress, reflecting a different color in the process. In another implementation, the structural color material/coating may include tiny nanocrystals that determine which colors are produced. Unlike pigments, which look the same from any angle and can bleed and fade, structurally derived colors stay vibrant indefinitely, can appear metallic, and enigmatically change as the underlying material is stretched. It should be appreciated that the structural color material may include some other type of material capable of changing colors based on an amount of stretch not described herein.

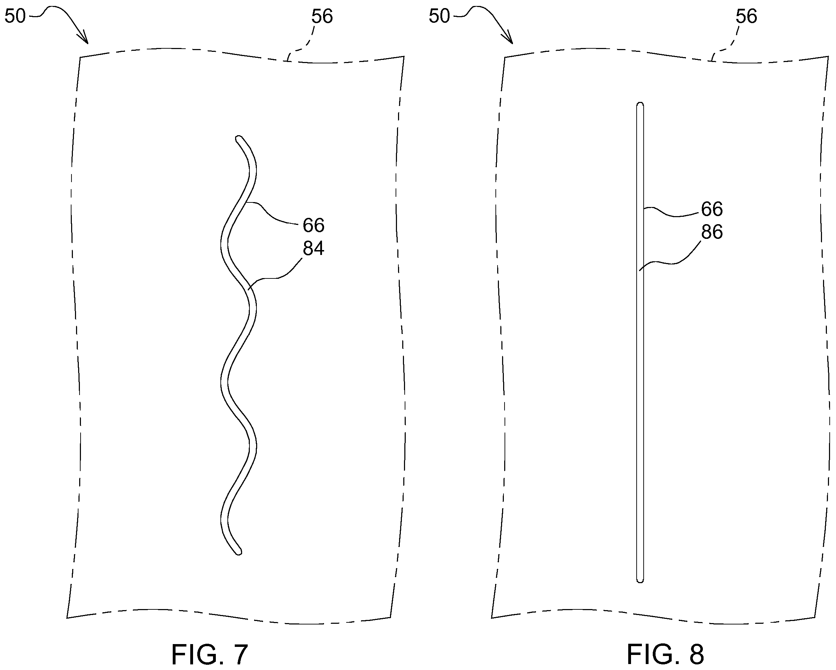

In another implementation, referring to FIGS. 7 and 8, the stretch characteristic of the stretch indicator 66 may include a shape of the stretch indicator 66. For example, as sown in FIG. 7, the first state of the stretch characteristic may include a first shape 84, and as shown in FIG. 8, the second state of the stretch characteristic include a second shape 86 that is different from the first shape 84. For example, in one implementation, the first shape 84 may include a non-linear shape such as but not limited to a zig-zag or sinusoidal shape. The second shape 86 may include a linear shape. In operation, prior to the sheet 54 of wrap material 56 being applied onto and wrapped around the cylindrical bale 38, i.e., in the initial un-stretched condition, the stretch indicator 66 may form the non-linear shape along the length 60 of the sheet 54 of wrap material 56. After installation, with the stretch indicator 66 stretched around the cylindrical bale 38, the stretch indicator 66 may exhibit a different, more linear shape. The stretch indicator 66 may be configured to exhibit the second state, e.g., the linear shape, when the sheet 54 of wrap material 56 and the stretch indicator 66 attached thereto are stretched to the desired stretch condition.

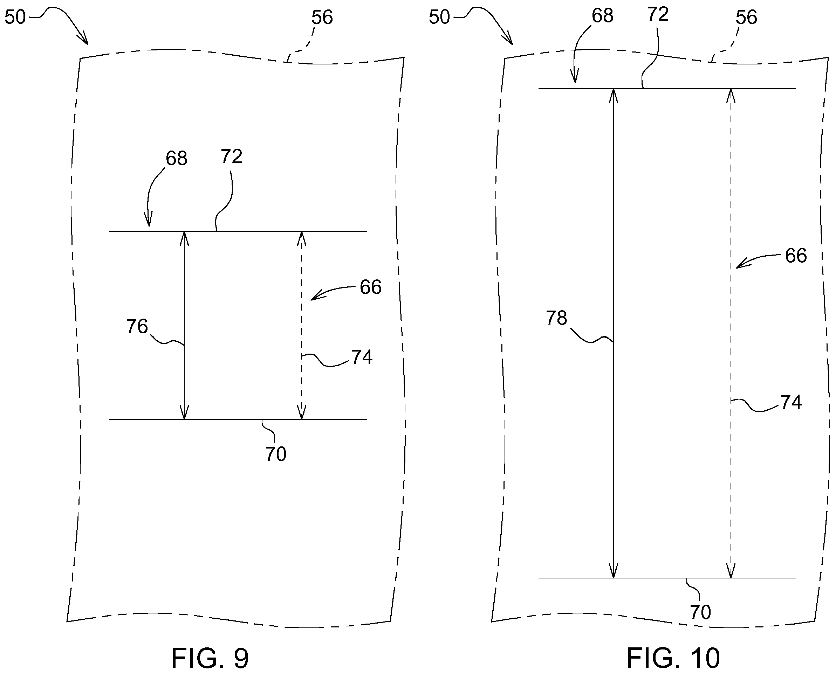

In another implementation, referring to FIGS. 9 and 10, the stretch indicator 66 may include an indicia 68 applied onto the sheet 54 of wrap material 56. The indicia 68 may include, but is not limited to, a pair of lines, i.e., a first line 70 and a second line 72, separated by a distance 74 along the length 60 of the sheet 54 of wrap material 56. As shown in FIG. 9, the distance 74 may be defined to equal a first distance 76 when the stretch indicator 66 and the sheet 54 of wrap material 56 are disposed in the initial un-stretched condition. As shown in FIG. 10, the distance 74 may be defined to equal a second distance 78 when the stretch indicator 66 and the sheet 54 of wrap material 56 are disposed in the desired stretch condition. It should be appreciated that the distance 74 changes continuously with and in proportion to the amount of stretch of the stretch indicator 66, between the first state and the second state. The human operator may measure the distance 74 between the first line 70 and the second line 72. If the measured distance 74 is less than the second distance 78, then the desired stretch condition has not yet been achieved. If the measured distance 74 is equal to or greater than the second distance 78, then the desired stretch condition has been achieved.

The sheet 54 of wrap material 56 with the included stretch indicator 66 enables the human operator to quickly and easily determine if the desired stretch condition has been achieved in the finished bale 38, or not. If the stretch characteristic is not disposed in the second state when the bale 38 is completed and wrapped, then the human operator can easily determine that the tension of the bale binder 50 is insufficient and/or less than the desired tension. The operator may then adjust the wrap system 48 of the round baler 20 to achieve the proper tension in the bale binder 50. As described above, the second state of the stretch indicator 66 may include, but is not limited to, the second color 82, the second shape 86, or a defined distance 74 between a pair of lines.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A bale binder (50) for wrapping around a circumferential exterior (52) of a cylindrical bale (38) to secure the cylindrical shape of the bale (38), the bale binder (50) comprising:
a sheet (54) of wrap material (56);
a stretch indicator (66) disposed on the sheet (54) of wrap material (56), wherein the stretch indicator (66) exhibits a stretch characteristic operable to change states based on an amount of stretch of the sheet (54) of wrap material (56);
wherein the stretch characteristic of the stretch indicator (66) exhibits a first state when the stretch indicator (66) is disposed in an initial un-stretched condition;
wherein the stretch characteristic of the stretch indicator (66) exhibits a second state when the stretch indicator (66) is disposed in a desired stretch condition; and
wherein the desired stretch condition includes a stretch magnitude greater than a pre-determined stretch value relative to the initial un-stretched condition.

2. The bale binder (50) set forth in claim 1, wherein the stretch characteristic includes a visual characteristic.

3. The bale binder (50) set forth in claim 1 or 2, wherein the stretch characteristic of the stretch indicator (66) includes one of a color, a shape, or a size of the stretch indicator (66).

4. The bale binder (50) according to at least one of the preceding claims, wherein the first state of the stretch characteristic includes a first color (80), and wherein the second state of the stretch characteristic includes a second color (82) different from the first color (80).

5. The bale binder (50) according to at least one of the preceding claims, wherein the stretch indicator (66) is operable to change color based on an amount of stretch of the stretch indicator (66) relative to the initial un-stretched condition.

6. The bale binder (50) according to at least one of the preceding claims, wherein the first state of the stretch characteristic includes a first shape (84), and wherein the second state of the stretch characteristic includes a second shape (86) different from the first shape (84).

7. The bale binder (50) according to at least one of the preceding claims, wherein the first shape (84) includes a non-linear shape, and wherein the second shape (86) includes a linear shape.

8. The bale binder (50) according to at least one of the preceding claims, wherein the stretch indicator (66) includes indicia (68) applied onto the sheet (54) of wrap material (56).

9. The bale binder (50) according to at least one of the preceding claims, wherein the stretch indicator (66) includes a coating operable to change color based on an amount of stretch exhibited by the stretch indicator (66).

10. The bale binder (50) according to at least one of the preceding claims, wherein the coating is applied onto the sheet (54) of wrap material (56).

11. The bale binder (50) according to at least one of the preceding claims, wherein the sheet (54) of wrap material (56) includes one of a net wrap material or a solid wrap material.

12. The bale binder (50) according to at least one of the preceding claims, wherein the stretch characteristic of the stretch indicator (66) continuously changes between the first state and the second state proportionally relative to an amount of stretch of the stretch indicator (66) relative to the initial un-stretched condition.

13. The bale binder (50) according to at least one of the preceding claims, wherein the stretch characteristic of the stretch indicator (66) remains in the first state as the amount of stretch of the stretch indicator (66) changes until the desired stretch condition is reached, after which the stretch characteristic of the stretch indicator (66) changes to the second state.

14. The bale binder (50) according to at least one of the preceding claims, wherein the stretch indicator (66) includes one of a coating and a material attached to the sheet (54) of wrap material (56).
